# EUROPEAN PATENT APPLICATION

(11) **EP 2 924 410 A1**
(43) Date of publication of application: **30.09.2015**
(21) Application number: 13886234.7
(22) Date of filing: 12.07.2013
(51) Int. Cl.: G01L 17/00

(54) **TYRE PRESSURE COLLECTOR AND SHELL THEREOF**

(30) Priority: 04.06.2013 CN 201310217834
(71) Applicant: Li, Zhitao, Zhongshan, Guangdong 528425 (CN); Steelmate Co., Ltd., Zhongshan, Guangdong 528425 (CN)
(72) Inventor: LI, Zhitao, Dongfu Road, Dongfeng Town (CN)
(74) Representative: Gulde & Partner
(86) International application number: PCT/CN2013/079285
(87) International publication number: WO 2014/194549

(57) **Abstract**

A tire pressure collector enclosure includes a gas communicating portion and a main body providing a receiving space. The gas communicating portion includes a cylindrical space one end of which is opened. This opened end is defined as the left side and the other end is defined as the right side. An axis of the cylindrical space is defined as a reference axis. The main body is connected with the gas communicating portion, the receiving space of the main body communicates the cylindrical space of the gas communicating portion, a depression portion recessed towards the opening is formed on the gas communicating portion at its right side surface, and a plurality of gripping portions are formed from top to bottom on the main body at its left side surface and are recessed towards the right side of the main body.

## Description

### FIELD OF THE INVENTION

The present invention relates to a tire pressure collector and more particularly, to an enclosure for enclosing functional components of said tire pressure collector.

### BACKGROUD OF THE INVENTION

A prior art tire pressure detector is coupled with a car tire gas nozzle through its pneumatic pipelines. Tire pressure date of the tire is obtained by at first opening a valve of the gas nozzle, then accessing interior of the tire, and finally measuring pressure through its gas pressure detecting device. The gas pressure data is acquired via mechanical or electronic manner thus achieving detection purpose. A car tire pressure collector also employs this principle and is somewhat different from a tire pressure detector in that the collector mainly collects gas pressure of one or more tires, while the detector mainly detects gas pressure of a single tire. Based on above difference, during operation, design requirement of the detector is often simple and focuses on realization of its function. Comparatively, more precise design is needed for the collector so as to get better grip effects and is suited for long term running.

In terms of marketability, tire pressure detector generally can be found in car repair shops for occasionally determining whether leakage occurs to a specific tire. With gradual development of external tire pressure gauges, more and more gas stations, car beauty shops and repair shops will sell external tire pressure gauges. Pre-sale tire pressure detection and collection as assistant marketing means will bring potential marketplace demand, this helping product promotion by salesman. The salesman may provide the driver with tire pressure detection service free of charge for selling their external tire pressure gauges. Often, there are a number of clients in this situation. Salesman has to detect tires of each car, this involving huge number of tires and being time-consuming. Accordingly, there is a need to provide a tire pressure collector having an improved enclosure suitable for long period use, and this product will have greater utility than a convention tire pressure detector.

A conventional tire pressure detector is not suitable for long term operation because its enclosure design is not convenient for gripping. Moreover, considering convenient gripping, its mechanics when collecting gas pressure should also be considered. Otherwise, it will still not be able to operate for long time. Of course, this kind of prior art gauge can't meet this design requirement due to failure to considering above potential marketplace requirement.

### SUMMARY OF THE INVENTION

One object of the invention is to provide a tire pressure collector enclosure which is convenient for gripping.

Another object of the invention is to provide a tire pressure collector which is convenient for gripping.

According to the invention, a tire pressure collector enclosure includes a gas communicating portion and a main body providing a receiving space. The gas communicating portion is of a cylindrical shape and includes a cylindrical space one end of which is opened. This opened end is defined as the left side and the other end is defined as the right side. An axis of the cylindrical space is defined as a reference axis. The main body is located below the reference axis and is connected with the gas communicating portion, the receiving space of the main body communicates the cylindrical space of the gas communicating portion, a depression portion recessed towards the opening is formed on the gas communicating portion at its right side surface, and a plurality of gripping portions are formed from top to bottom on the main body at its left side surface and are recessed towards the right side of the main body.

Preferably, the tire pressure collector enclosure as recited in claim 1, wherein at least part of the depression portion is higher than the gripping portion along a vertical direction. Both the left and right sides of the main body are of convex arc shape. The tire pressure collector enclosure as recited in claim 1, wherein the depression portion extends cross the main body and gas communicating portion a surface of said depression portion and/or that of any one or more of the gripping portions is provided with uneven texture. The gripping portion is tilted.

To increase friction, a surface of said depression portion and/or that of any one or more of the gripping portions is a regularly inwardly curved surface.

Preferably, the inwardly curved surface of the depression portion runs across an arc with an angle of 70-90 degree. The number of gripping portions is four.

A tire pressure collector according to the invention includes functional components for realizing tire pressure detection, and said functional components are installed on the enclosure as recited above.

The present invention meets ergonomics design. It also permits the operator to press the depression portion by his thumb, while grip the gripping portion by rest fingers, thus the tire pressure collector being held stably by the operator. In addition, as the depression is substantially in a line with the opening for connecting with the gas nozzle, the thumb may better apply force, thus resulting in easy and high efficient operation. Therefore, it is suitable for repeatedly gripping and operation for a long time.

### BRIEF DESCRIPTION OF THE DRAWINGS

Figure 1 shows a front view of a tire pressure collector according to the invention;
Figure 2 shows a left plan view of a tire pressure collector according to the invention; and
Figure 3 shows a right plan view of a tire pressure collector according to the invention.

### DETAILED DESCRIPTION OF THE INVENTION

The present invention is described in further detail in conjunction with various embodiments and accompanied drawings.

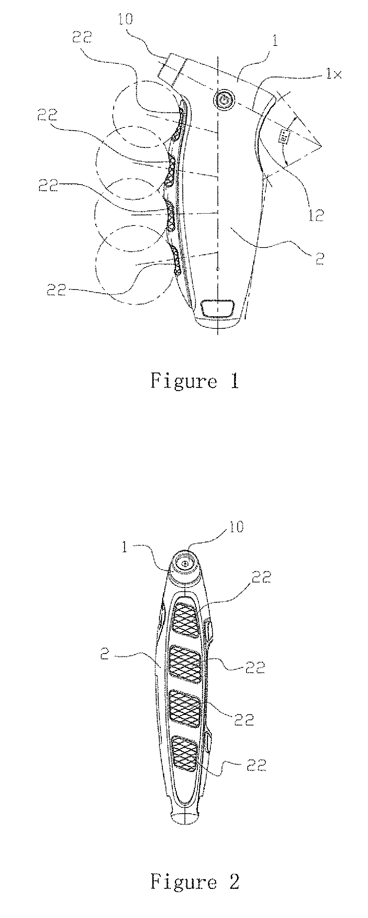

Refer to figure 1 showing a front view of a tire pressure collector according to the invention to indicate construction of an enclosure. Internal construction of the tire pressure collector is not shown in figures. For example, functional members of the collector built in the enclosure such as a valve for pushing a gas nozzle, mechanical valve member for communicating inside space of the tire so as to obtain tire pressure, gas communicating member and detection circuit for conducting tire gas into the gas detection circuit, and an indicator circuit for finally showing data obtained by the detection circuit, are not shown, as these members are well known by person of skill in the art.

The enclosure includes two parts, one of which is a gas communicating portion 1 and the other one is a main body 2.

The gas communicating portion 1 is generally of a cylindrical shape and internally has a cylindrical space 10. One end of the cylindrical space extends out of the gas communicating portion 1 so as to define an opening 10 at one end of the gas communicating portion 1. A mechanical valve member used for the tire pressure collector may be mounted in the opening 10. The mechanical valve member may be pressed against the gas nozzle of the tire so that a valve of the gas nozzle will be opened. Therefore, interior gas pressure of the tire is communicated with the cylindrical space. Next, gas pressure is conduced to the detection circuit by said gas communicating member. Pressure detection is performed using a pressure sensor of said detection circuit.

Referring to figure 1, said main body 2 generally is of an ellipse shape and as a result, its left and right sides are of convex arced shape. Inside the main body 2 is a receiving space (not shown) for receiving the gas communicating member, detection circuit and indicator circuit of the tire pressure collector. Considering placement of functional parts of the collector, it is preferred that the receiving space of the main body 2 be communicated with the cylindrical space of the gas communicating portion 1. In implementation, the gas communicating portion 1 and main body 2 each may be divided into two identical sub-portions, and corresponding sub-portions of the portion 1 and body 2 at a same side may be integral. During assembly, these sub-portions may be fastened together so as to form said enclosure.

To facilitate further description of the invention, as shown in figure 1, an axis of the cylindrical space of the gas communicating portion 1 is defined as a reference axis 1x. One side where the opening 10 is formed is defined as left side, while the other side opposite to the side where the opening 10 is formed is defined as right side. Correspondingly, location below the axis may also be clearly defined.

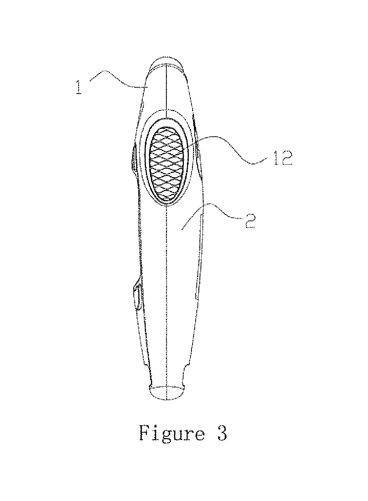

The main body 2 is located below the reference axis 1x and is connected with the gas communicating portion 1 (they can be formed integrally) . The main body 2 is entirely of an arc shape and its left and right side views are depicted in figures 2, 3. In these figures, the horizontal direction is the thickness direction and the thickness is small.

Along the horizontal direction of figure 2, four gripping portions 22 are formed on the main body 2 from top to bottom. Each gripping portion 22 is concave from left to right side of figure 1 and is generally a concave curved surface. In addition, uneven texture is formed on each gripping portion 22 for increasing friction when being gripped. Four gripping portions 22 are close to and separate from each other so as to conform to four fingers except for thumb of a person. It can be seen from figure 2 that four gripping portions 22 may be slightly tilted for example towards left-bottom or right-bottom so as to conform to left hand or right hand habit respectively.

Along the horizontal direction of figure 3, at one side opposite to the opening 10 of the gas communicating portion 1, a regularly inwardly curved depression portion 12 is provided on the gas communicating portion 1. Similarly, uneven texture is formed on the surface of the depression portion 12 for enhancing friction when depressed by the thumb. It is clear from figure 3 that the depression portion 12 is of generally an ellipse shape. Therefore, from top to bottom of the depression portion 12, there is a transverse arc segment with an angle of 70-90 degree and preferably of 80 or 81 degree. Said depression portion 12 may extend cross the gas communicating portion 1 and main body 2. Along a vertical direction of figures 1-3, at least part of the depression portion 12 is higher than the gripping portions 22 and especially higher than the uppermost gripping portion 22 (that is, the gripping portion 22 to be touched by the first finger).

In a summary, the gas communicating portion 1 and main body 2 together construct the tire pressure collector enclosure. Said depression portion 12 and the opening 10 of the gas communicating portion 1 are located respectively at two sides of an axis. During operation, depression imposed by the thumb may be effectively applied to the valve of the gas nozzle. Moreover, four gripping portions 22 formed on the main body 2 may be useful for being gripped by the rest four fingers of a person. Accordingly, it meets ergonomics design, and is suitable for repeatedly performing tire pressure collection for a long time, thus assisting in expanding application of the tire pressure collector.

Though various embodiments of the invention have been illustrated above, a person of ordinary skill in the art will understand that, variations and improvements made upon the illustrative embodiments fall within the scope of the invention, and the scope of the invention is only limited by the accompanying claims and their equivalents.

## Claims

1. A tire pressure collector enclosure comprising a gas communicating portion and a main body providing a receiving space, wherein the gas communicating portion is of a cylindrical shape and comprises a cylindrical space one end of which is opened, this opened end is defined as a left side and the other end is defined as a right side, an axis of the cylindrical space is defined as a reference axis, the main body is located below the reference axis and is connected with the gas communicating portion, the receiving space of the main body communicates the cylindrical space of the gas communicating portion, a depression portion recessed towards the opening is formed on the gas communicating portion at its right side surface, and a plurality of gripping portions are formed from top to bottom on the main body at its left side surface and are recessed towards the right side of the main body.

2. The tire pressure collector enclosure as recited in claim 1, wherein at least part of the depression portion is higher than the gripping portion along a vertical direction.

3. The tire pressure collector enclosure as recited in claim 1, wherein both the left and right sides of the main body are of convex arc shape.

4. The tire pressure collector enclosure as recited in claim 1, wherein the depression portion extends cross the main body and gas communicating portion.

5. The tire pressure collector enclosure as recited in claim 1, wherein a surface of said depression portion and/or that of any one or more of the gripping portions is provided with uneven texture.

6. The tire pressure collector enclosure as recited in claim 1, wherein the gripping portion is tilted.

7. The tire pressure collector enclosure as recited in claim 1, wherein a surface of said depression portion and/or that of any one or more of the gripping portions is a regularly inwardly curved surface.

8. The tire pressure collector enclosure as recited in claim 7, wherein the inwardly curved surface of the depression portion runs across an arc with an angle of 70-90 degree.

9. The tire pressure collector enclosure as recited in claim 1, wherein the number of gripping portions is four.

10. A tire pressure collector, comprising functional components for realizing tire pressure detection, wherein said functional components are installed on the enclosure as recited in any one of claims 1-9.
